(19) Europäisches Patentamt / European Patent Office / Office européen des brevets

(11) **EP 4 245 735 A1**

(12) # EUROPEAN PATENT APPLICATION
published in accordance with Art. 153(4) EPC

(43) Date of publication:
**20.09.2023 Bulletin 2023/38**

(21) Application number: **20961571.5**

(22) Date of filing: **12.11.2020**

(51) International Patent Classification (IPC):
*C03C 3/21* (2006.01)    *C03C 3/068* (2006.01)
*C03C 3/17* (2006.01)    *C03C 3/19* (2006.01)

(52) Cooperative Patent Classification (CPC):
**C03C 3/068; C03C 3/17; C03C 3/19; C03C 3/21**

(86) International application number:
**PCT/JP2020/042233**

(87) International publication number:
**WO 2022/102043 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIKON CORPORATION**
**Minato-ku**
**Tokyo 108-6290 (JP)**

(72) Inventor: **KOIDE, Tetsuya**
**Tokyo 108-6290 (JP)**

(74) Representative: **Viering, Jentschura & Partner
mbB**
**Patent- und Rechtsanwälte**
**Grillparzerstraße 14**
**81675 München (DE)**

(54) **OPTICAL GLASS, OPTICAL ELEMENT, OPTICAL SYSTEM, DOUBLET LENS, INTERCHANGEABLE LENS FOR CAMERA, OBJECTIVE LENS FOR MICROSCOPE, AND OPTICAL DEVICE**

(57)    An optical glass includes: by mass%, 20% to 50% of a content rate of $P_2O_5$; 10% to 35% of a content rate of $TiO_2$; 0% to 20% of a content rate of $Nb_2O_5$; and 5% to 30% of a content rate of $Bi_2O_3$, wherein a ratio of a content rate of $TiO_2$ to a content rate of $P_2O_5$ ($TiO_2/P_2O_5$) is from 0.30 to 0.75.

*Fig. 1*

EP 4 245 735 A1

**Description**

Technical Field

The present invention relates to an optical glass, an optical element, an optical system, a cemented lens, an interchangeable camera lens, an objective lens for a microscope, and an optical device.

Background Art

In recent years, imaging equipment and the like including an image sensor with a large number of pixels have been developed, and an optical glass that has low dispersion and a high partial dispersion ratio has been demanded as an optical glass to be used for such equipment.

Citation List

Patent Literature

PTL 1: JP 2006-219365 A

Summary of Invention

A first aspect according to the present invention is an optical glass including: by mass%, 20% to 50% of a content rate of $P_2O_5$; 10% to 35% of a content rate of $TiO_2$; 0% to 20% of a content rate of $Nb_2O_5$; and 5% to 30% of a content rate of $Bi_2O_3$, wherein a ratio of a content rate of $TiO_2$ to a content rate of $P_2O_5$ ($TiO_2/P_2O_5$) is from 0.30 to 0.75.

A second aspect according to the present invention is an optical element using the optical glass described above.

A third aspect according to the present invention is an optical system including the optical element described above.

A fourth aspect according to the present invention is an interchangeable camera lens including the optical system including the optical element described above.

A fifth aspect according to the present invention is an objective lens for a microscope including the optical system including the optical element described above.

A sixth aspect according to the present invention is an optical device including the optical system including the optical element described above.

A seventh aspect according to the present invention is a cemented lens including a first lens element and a second lens element, and at least one of the first lens element and the second lens element is the optical glass described above.

An eighth aspect according to the present invention is an optical system including the cemented lens described above.

A ninth aspect according to the present invention is an objective lens for a microscope including the optical system including the cemented lens described above.

A tenth aspect according to the present invention is an interchangeable camera lens including the optical system including the cemented lens described above.

An eleventh aspect according to the present invention is an optical device including the optical system including the cemented lens described above.

Brief Description of Drawings

FIG. 1 is a perspective view illustrating one example of an optical device according to the present embodiment as an imaging device.

FIG. 2 is a schematic diagram illustrating another example of the optical device according to the present embodiment as an imaging device, and is a front view of the imaging device.

FIG. 3 is a schematic diagram illustrating another example of the optical device according to the present embodiment as an imaging device, and is a back view of the imaging device.

FIG. 4 is a block diagram illustrating one example of a configuration of a multi-photon microscope according to the present embodiment.

FIG. 5 is a schematic diagram illustrating one example of a cemented lens according to the present embodiment.

FIG. 6 is a graph in which $P_{g,F}$ and $v_d$ of Examples and Comparative Examples are plotted.

Description of Embodiments

Hereinafter, description is made on an embodiment of the present invention (hereinafter, referred to as the "present embodiment"). The present embodiment described below is an example for describing the present invention, and is not intended to limit the present invention to the contents described below. The present invention may be modified as appropriate and carried out without departing from the gist thereof.

In the present specification, a content rate of each of all the components is expressed with mass% (mass percentage) with respect to the total weight of glass in terms of an oxide-converted composition unless otherwise stated. Note that, assuming that oxides, complex salt, and the like, which are used as raw materials as glass constituent components in the present embodiment, are all decomposed and turned into oxides at the time of melting, the oxide-converted composition described herein is a composition in which each component contained in the glass is expressed with a total mass of the oxides as 100 mass%.

An expression that a Q content rate is "0% to N%" is an expression including a case where a Q component is not included and a case where a Q component is more than 0% and equal to or less than N%.

An expression that a "Q component is not included" means that the Q component is not substantially included, and that a content rate of the constituent component is an impurity level or less. The impurity level or less means, for example, being less than 0.01%.

An expression of "devitrification resistance stability" means resistance to devitrification of glass. Here, "devitrification" means a phenomenon in which transparency of glass is lost due to crystallization, phase splitting, or the like that occurs when the glass is heated to a glass transition temperature or higher or when the glass is lowered from a molten state to a liquid phase temperature or lower.

An optical glass according to the present embodiment is an optical glass including, by mass%, 20% to 50% of a content rate of $P_2O_5$, 10% to 35% of a content rate of $TiO_2$, 0% to 20% of a content rate of $Nb_2O_5$, and 5% to 30% of a content rate of $Bi_2O_3$, wherein a ratio of a content rate of $TiO_2$ to a content rate of $P_2O_5$ ($TiO_2/P_2O_5$) is from 0.30 to 0.75.

The optical glass according to the present embodiment can have low dispersion (great abbe number) and can have a high partial dispersion ratio. Thus, a light-weighted lens that is advantageous in aberration correction can be achieved.

$P_2O_5$ is a component that forms a glass frame, improves devitrification resistance stability, reduces a refractive index, and degrades chemical durability. When the content rate of $P_2O_5$ is excessively reduced, devitrification is liable to be caused. When the content rate of $P_2O_5$ is excessively increased, a refractive index is liable to be reduced, and chemical durability is liable to be degraded. From such a viewpoint, the content rate of $P_2O_5$ is from 20% to 50%. A lower limit of this content rate is preferably 25%, more preferably 30%, further preferably 35%. An upper limit of this content rate is preferably 45%, more preferably 40%, further preferably 38%. When the content rate of $P_2O_5$ falls within such a range, devitrification resistance stability can be improved, chemical durability can be satisfactory, and a refractive index can be increased.

$TiO_2$ is a component that increases a refractive index and a partial dispersion ratio and reduces a transmittance. When the content rate of $TiO_2$ is excessively reduced, a refractive index and a partial dispersion ratio are liable to be reduced. When the content rate of $TiO_2$ is excessively increased, a transmittance is liable to be degraded. From such a viewpoint, the content rate of $TiO_2$ is from 10% to 35%. A lower limit of this content rate is preferably 15%, more preferably 17%, further preferably 20%. An upper limit of this content rate is preferably 30%, more preferably 28%, further preferably 25%. When the content rate of $TiO_2$ falls within such range, a high transmittance can be achieved without reducing a refractive index and a partial dispersion ratio.

$Nb_2O_5$ is a component that increases a refractive index, improves dispersion, and reduces a transmittance. When the content rate of $Nb_2O_5$ is reduced, a refractive index is liable to be reduced. When the content rate of $Nb_2O_5$ is increased, a transmittance is liable to be degraded. From such a viewpoint, the content rate of $Nb_2O_5$ is from 0% to 20%. A lower limit of this content rate may be more than 0%. An upper limit of this content rate is preferably 10%, more preferably 5%. Further preferably, $Nb_2O_5$ is substantially excluded.

$Bi_2O_3$ is a component that increases a refractive index and a partial dispersion ratio. When the content rate of $Bi_2O_3$ is excessively increased, a transmittance is liable to be degraded, and dispersion is liable to be increased. When the content rate of $Bi_2O_3$ is excessively reduced, meltability is liable to be degraded. From such a viewpoint, the content rate of $Bi_2O_3$ is from 5% to 30%. A lower limit of this content rate is preferably 10%, more preferably 15%. An upper limit of this content rate is preferably 25%, more preferably 20%. When the content rate of $Bi_2O_3$ falls within such range, meltability can be increased, and a dispersion increase can be prevented.

A ratio of the content rate of $TiO_2$ to the content rate of $P_2O_5$ ($TiO_2/P_2O_5$) is preferably from 0.30 to 0.75. A lower limit of this ratio is more preferably 0.40. An upper limit of this ratio is more preferably 0.70, further preferably 0.60. When $TiO_2/P_2O_5$ falls within such range, a partial dispersion ratio can be increased.

The optical glass according to the present embodiment further contains, as optional component(s), one or more compounds selected from the group consisting of $Al_2O_3$, $Ta_2O_5$, $Li_2O$, $Na_2O$, $K_2O$, $ZnO$, $MgO$, $CaO$, $SrO$, $BaO$, $SiO_2$, $B_2O_3$, $WO_3$, $ZrO_2$, $Sb_2O_3$, $Y_2O_3$, $La_2O_3$, and $Gd_2O_3$.

$Al_2O_3$ is a component that improves chemical durability and reduces a partial dispersion ratio and meltability. When the content rate of $Al_2O_3$ is excessively reduced, chemical durability is liable to be degraded. When the content rate of $Al_2O_3$ is excessively increased, a partial dispersion ratio is liable to be reduced, and meltability is liable to be degraded. From such a viewpoint, the content rate of $Al_2O_3$ is from 0% to 10%. A lower limit of this content rate is preferably more than 0%, more preferably 1%. An upper limit of this content rate is preferably 7%, more preferably 2%, further preferably 1.6%. When the content rate of $Al_2O_3$ falls within such range, chemical durability can be increased, and reduction of a partial dispersion ratio can be prevented.

$Ta_2O_5$ is a component that increases a refractive index, improves dispersion, and degrade devitrification resistance stability. When the content rate of $Ta_2O_5$ is increased, devitrification resistance stability is liable to be degraded. From such a viewpoint, the content rate of $Ta_2O_5$ is from 0% to 20%. A lower limit of this content rate may be more than 0%. An upper limit of this content rate is preferably 10%, more preferably 5%. Further preferably, Ta is substantially excluded. Here, "substantially excluded" means that the component is not contained as a constituent component that affects a property of a glass composition beyond a concentration in which the component is inevitably contained as an impurity. For example, when the content amount is approximately 100 ppm, the component is considered to be substantially excluded. The optical glass according to the present embodiment enables a content rate of $Ta_2O_5$ being an expensive raw material to be reduced, and further enables such material to be excluded. Thus, the optical glass according to the present embodiment is also excellent in reduction of raw material cost.

From a viewpoint of meltability, the content rate of $Li_2O$ is from 0% to 5%. A lower limit of this content rate may be more than 0%. An upper limit of this content rate is preferably 4%, more preferably 3%, further preferably 2%.

$Na_2O$ is a component that improves meltability and reduces a refractive index. When the content rate of $Na_2O$ is excessively reduced, meltability is liable to be degraded. When the content rate of $Na_2O$ is excessively increased, a refractive index is liable to be reduced, and chemical durability is liable to be degraded. From such a viewpoint, the content rate of $Na_2O$ is from 0% to 25%. A lower limit of this content rate is preferably more than 0%, more preferably 5%. An upper limit of this content rate is preferably 20%, more preferably 18%, further preferably 15%. When the content rate of $Na_2O$ falls within such range, meltability can be increased, and reduction of a refractive index and degradation of chemical durability can be prevented.

$K_2O$ is a component that improves meltability and reduces a refractive index. When the content rate of $K_2O$ is excessively reduced, meltability is liable to be degraded. When the content rate of $K_2O$ is excessively increased, a refractive index is liable to be reduced, and chemical durability is liable to be degraded. From such a viewpoint, the content rate of $K_2O$ is from 0% to 25%. A lower limit of this content rate is preferably more than 0%, more preferably 3%. An upper limit of this content rate is preferably 20%, more preferably 15%, further preferably 10%. When the content rate of $K_2O$ falls within such range, meltability can be increased, and reduction of a refractive index and degradation of chemical durability can be prevented.

$ZnO$ is a component that improves devitrification resistance stability and reduces a partial dispersion ratio. When the content rate of $ZnO$ is excessively reduced, devitrification resistance stability is liable to be degraded. When the content rate of $ZnO$ is excessively increased, a partial dispersion ratio is liable to be reduced. From such a viewpoint, the content rate of $ZnO$ is from 0% to 15%. A lower limit of this content rate is preferably more than 0%, more preferably 1%. An upper limit of this content rate is preferably 12%, more preferably 8%, further preferably 5%. When the content rate of $ZnO$ falls within such range, devitrification resistance stability can be increased, and reduction of a partial dispersion ratio can be prevented.

From a viewpoint of achieving high dispersion, the content rate of $MgO$ is from 0% to 10%. A lower limit of this content rate may be more than 0%. An upper limit of this content rate is preferably 8%, more preferably 5%, further preferably 3%.

From a viewpoint of achieving high dispersion, the content rate of $CaO$ is from 0% to 8%. A lower limit of this content rate may be more than 0%. An upper limit of this content rate is preferably 50, more preferably 3%, further preferably 2%.

From a viewpoint of achieving high dispersion, the content rate of $SrO$ is from 0% to 10%. A lower limit of this content rate may be more than 0%. An upper limit of this content rate is preferably 80, more preferably 5%, further preferably 3%.

$BaO$ is a component that improves a partial dispersion ratio and degrade devitrification resistance stability. When the content rate of $BaO$ is excessively reduced, a partial dispersion ratio is liable to be reduced. When the content rate of $BaO$ is excessively increased, devitrification resistance stability is liable to be degraded. From such a viewpoint, the content rate of $BaO$ is from 0% to 15%. A lower limit of this content rate is preferably more than 0%, more preferably 5%, further preferably 7%. An upper limit of this content rate is preferably 12%, more preferably 10%, further preferably 8%. When the content rate of $BaO$ falls within such range, a partial dispersion ratio can be increased, and degradation of devitrification resistance stability can be prevented.

From a viewpoint of meltability, the content rate of $SiO_2$ is from 0% to 5%. A lower limit of this content rate may be more than 0%. An upper limit of this content rate is preferably 4%, more preferably 2%, further preferably 1%.

From a viewpoint of achieving high dispersion, the content rate of $B_2O_3$ is from 0% to 10%. A lower limit of this content rate may be more than 0%. An upper limit of this content rate is preferably 8%, more preferably 5%, further preferably 3%.

From a viewpoint of a transmittance, the content rate of $WO_3$ is from 0% to 25%. A lower limit of this content rate may be more than 0%. An upper limit of this content rate is preferably 20%, more preferably 18%, further preferably 15%.

From a viewpoint of meltability, the content rate of $ZrO_2$ is from 0% to 5%. A lower limit of this content rate may be more than 0%. An upper limit of this content rate is preferably 3%, more preferably 2%, further preferably 1.5%.

From a viewpoint of meltability, the content rate of $Y_2O_3$ is from 0% to 10%. A lower limit of this content rate may be more than 0%. An upper limit of this content rate is preferably 7%, more preferably 6%, further preferably 5%.

From a viewpoint of meltability, the content rate of $La_2O_3$ is from 0% to 8%. A lower limit of this content rate may be more than 0%. An upper limit of this content rate is preferably 7%, more preferably 6%, further preferably 5%. From a viewpoint of cost, $La_2O_3$ is more preferably substantially excluded. Here, "substantially excluded" means that the component is not contained as a constituent component that affects a property of a glass composition beyond a concentration in which the component is inevitably contained as an impurity. For example, when the content amount is approximately 100 ppm, the component is considered to be substantially excluded.

$Gd_2O_3$ is an expensive raw material, and hence the content rate thereof is preferably from 0% to 10%. A lower limit of this content rate may be more than 0%. An upper limit of this content rate is preferably 8%, more preferably 7%, further preferably 5%.

The content rate of $Sb_2O_3$ is, from a viewpoint of a defoaming property at the time of melting of glass, from 0% to 1%. A lower limit of this content rate may be more than 0%. An upper limit of this content rate is preferably 0.5%, more preferably 0.2%.

Furthermore, the optical glass according to the present embodiment preferably satisfies the following relationships.

A ratio of the content rate of $Al_2O_5$ to the content rate of $TiO_2$ ($Al_2O_3/TiO_2$) is preferably from 0 to 0.60. A lower limit of this ratio may be more than 0. An upper limit of this ratio is more preferably 0.50, further preferably 0.30. When $Al_2O_3/TiO_2$ falls within such range, a partial dispersion ratio can be increased.

A ratio of the content rate of $B_2O_3$ to the content rate of $P_2O_5$ ($B_2O_3/P_2O_5$) is preferably 0 to 0.15. A lower limit of this ratio may be more than 0. An upper limit of this ratio is more preferably 0.12, further preferably 0.09. When $B_2O_3/P_2O_5$ falls within such range, a partial dispersion ratio can be increased.

A ratio of the content rate of $TiO_2$ to the total content rate of $P_2O_5$, $B_2O_3$, and $Al_2O_3$ ($TiO_2/(P_2O_5 + B_2O_3 + Al_2O_3)$) is preferably from 0.25 to 0.75. A lower limit of this ratio is more preferably 0.35, further preferably 0.40. An upper limit of this ratio is more preferably 0.70, further preferably 0.60. When $TiO_2/(P_2O_5 + B_2O_3 + Al_2O_3)$ falls within such range, a partial dispersion ratio can be increased.

A ratio of the content rate of $TiO_2$ to the total content rate of $TiO_2$, $Nb_2O_5$, $WO_3$, $Bi_2O_3$, and $Ta_2O_5$ ($TiO_2/(TiO_2 + Nb_2O_5 + WO_3 + Bi_2O_3 + Ta_2O_5)$) is preferably from 0.20 to 0.90. A lower limit of this ratio is more preferably 0.30, further preferably 0.50. An upper limit of this ratio is more preferably 0.80, further preferably 0.70. When $TiO_2/(TiO_2 + Nb_2O_5 + WO_3 + Bi_2O_3 + Ta_2O_5)$ falls within such range, a partial dispersion ratio can be increased.

A ratio of the total content rate of BaO and $TiO_2$ to the content rate of $P_2O_5$ ($(BaO + TiO_2)/P_2O_5$) is preferably from 0.30 to 1.00. A lower limit of this ratio is more preferably 0.40, further preferably 0.50. An upper limit of this ratio is more preferably 0.90, further preferably 0.80. When $(BaO + TiO_2)/P_2O_5$ falls within such range, a refractive index can be increased.

A ratio of the total content rate of BaO, $TiO_2$, $Nb_2O_5$, $WO_3$, $Bi_2O_3$, and $Ta_2O_5$ to the total content rate of $P_2O_5$, $B_2O_3$, $SiO_2$, and $Al_2O_3$ ($(BaO + TiO_2 + Nb_2O_5 + WO_3 + Bi_2O_3 + Ta_2O_5) / (P_2O_5 + B_2O_3 + SiO_2 + Al_2O_3)$) is preferably from 0.50 to 2.50. A lower limit of this ratio is more preferably 0.60, further preferably 0.70. An upper limit of this ratio is more preferably 2.00, further preferably 1.70. When $(BaO + TiO_2 + Nb_2O_5 + WO_3 + Bi_2O_3 + Ta_2O_5) /(P_2O_5 + B_2O_3 + SiO_2 + Al_2O_3)$ falls within such a range, a partial dispersion ratio can be increased, and reduction of a refractive index can be prevented.

From a viewpoint of meltability, a refractive index, and chemical durability, the total content rate of $Li_2O$, $Na_2O$, and $K_2O$ ($\Sigma A_2O$; where, A = Li, Na, K) is 5% to 35%. A lower limit of this total content rate is preferably 8%, more preferably 11%, further preferably 13%. An upper limit of this total content rate is preferably 33%, more preferably 30%, further preferably 25%.

From a viewpoint of meltability, a refractive index, and chemical durability, the total content rate of MgO, CaO, SrO, BaO, and ZnO ($\Sigma EO$; where, E = Mg, Ca, Sr, Ba, Zn) is 0% to 18%. A lower limit of this total content rate is preferably 3%, more preferably 5%. An upper limit of this total content rate is preferably 15%, more preferably 13%.

A suitable combination of the content rates is the content rate of $Li_2O$: 0% or more and 5% or less, the content rate of $Na_2O$: 0% or more and 25% or less, and the content rate of $K_2O$: 0% or more and 25% or less. With the combination, meltability can be increased, and degradation of chemical durability can be prevented.

Another suitable combination is the content rate of BaO: 0% or more and 15% or less, the content rate of ZnO: 0% or more and 15% or less, the content rate of MgO: 0% or more and 10% or less, the content rate of CaO: 0% or more and 8% or less, and the content rate of SrO: 0% or more and 10% or less. With the combination, a partial dispersion ratio can be increased, and low dispersion can be prevented.

Still another suitable combination is the content rate of $SiO_2$: 0% or more and 5% or less and the content rate of $B_2O_3$: 0% or more and 10% or less. With the combination, meltability can be increased, and low dispersion can be prevented.

A ratio of the total content rate of $Li_2O$, $Na_2O$, and $K_2O$ ($\Sigma A_2O$; where, A = Li, Na, K) to the content rate of $TiO_2$ ($\Sigma A_2O/TiO_2$) is preferably from 0.30 to 2.00. A lower limit of this ratio is more preferably 0.50, further preferably 0.60. An upper limit of this ratio is more preferably 1.50, further preferably 1.30. When $\Sigma A_2O/TiO_2$ falls within such range, a partial dispersion ratio can be increased, and reduction of meltability can be prevented.

A ratio of the total content rate of MgO, CaO, SrO, BaO, and ZnO ($\Sigma EO$; where, E = Mg, Ca, Sr, Ba, Zn) to the total content rate of $Li_2O$, $Na_2O$, and $K_2O$ ($\Sigma A_2O$; where, A = Li, Na, K) ($SEO/EA_2O$) is preferably from 0 to 1.50. A lower limit of this ratio is more preferably 0.40, further preferably 0.90. An upper limit of this ratio is more preferably 1.30, further preferably 1.20. When $\Sigma EO/\Sigma A_2O$ falls within such range, meltability can be increased, and reduction of a refractive index can be prevented.

For the purpose of, for example, performing fine adjustments of fining, coloration, decoloration, and optical constant values, a known component such as a fining agent, a coloring agent, a defoaming agent, and a fluorine compound may be added by an appropriate amount to the glass composition as needed. In addition to the above-mentioned components, other components may be added as long as the effect of the optical glass according to the present embodiment can be exerted.

A method of manufacturing the optical glass according to the present embodiment is not particularly limited, and a publicly known method may be adopted. Further, suitable conditions can be selected for the manufacturing conditions as appropriate. For example, there may be adopted a manufacturing method in which raw materials such as oxides, carbonates, nitrates, and sulfates are blended to obtain a target composition, melted at a temperature of preferably from 1,100 to 1,400 degrees Celsius, uniformed by stirring, subjected to defoaming, then poured in a mold, and molded. A lower limit of the melting temperature described above is more preferably 1200 degrees Celsius. An upper limit of the melting temperature is more preferably 1350 degrees Celsius, further preferably 1300 degrees Celsius. The optical glass thus obtained is processed to have a desired shape by performing reheat pressing or the like as needed, and is subjected to polishing. With this, a desired optical element is obtained.

A high-purity material with a small content rate of impurities in the raw material is preferably used as the raw material. The high-purity material indicates a material including 99.85 mass% or more of a concerned component. By using the high-purity material, an amount of impurities is reduced, and hence an inner transmittance of the optical glass is likely to be increased.

Next, description is made on physical properties of the optical glass according to the present embodiment.

From a viewpoint of reduction in thickness of the lens, the optical glass according to the present embodiment preferably has a high refractive index (a refractive index ($n_d$) is large). However, in general, as the refractive index ($n_d$) is higher, the transmittance is liable to be reduced. In view of such a circumstance, the refractive index ($n_d$) of the optical glass according to the present embodiment with respect to a d-line preferably falls within a range from 1.61 to 1.90. A lower limit of the refractive index ($n_d$) is more preferably 1.70, further preferably 1.75. An upper limit of the refractive index ($n_d$) is more preferably 1.85, further preferably 1.80.

An abbe number ($v_d$) of the optical glass according to the present embodiment preferably falls within a range from 20 to 32. A lower limit of the abbe number ($v_d$) is more preferably 22. An upper limit of the abbe number ($v_d$) is more preferably 30.

With regard to the optical glass according to the present embodiment, a preferable combination of the refractive index ($n_d$) and the abbe number ($v_d$) is the refractive index ($n_d$) with respect to the d-line falling within a range from 1.61 to 1.90 and the abbe number ($v_d$) falling within a range from 20 to 32. An optical system in which chromatic aberration and other aberrations are satisfactorily corrected can be designed by, for example, combining the optical glass according to the present embodiment having such properties with other optical glasses.

From a viewpoint of aberration correction of the lens, the optical glass according to the present embodiment preferably has a large partial dispersion ratio ($P_{g, F}$). In view of such circumstance, the partial dispersion ratio ($P_{g, F}$) of the optical glass according to the present embodiment is preferably 0.60 or more. A lower limit of the partial dispersion ratio ($P_{g, F}$) is more preferably 0.62, further preferably 0.64. An upper limit of the partial dispersion ratio ($P_{g, F}$) is not particularly limited, but may be, for example, 0.66.

From a viewpoint of aberration correction of the lens, the optical glass according to the present embodiment preferably has great abnormal dispersibility ($\Delta P_{g, F}$). In view of such circumstance, the value ($\Delta P_{g, F}$) indicating the abnormal dispersibility of the optical glass according to the present embodiment is preferably 0.015 or more. A lower limit of the value ($\Delta P_{g, F}$) indicating the abnormal dispersibility is more preferably 0.02, further preferably 0.03. An upper limit of the value ($\Delta P_{g, F}$) indicating the abnormal dispersibility is not particularly limited, but may be, for example, 0.042.

From the above-mentioned viewpoint, the optical glass according to the present embodiment can be suitably used as, for example, an optical element. Such an optical element includes a mirror, a lens, a prism, a filter, and the like. Examples of an optical system in which the optical element described above is used include, for example, an objective lens, a condensing lens, an image forming lens, and an interchangeable camera lens. The optical system can be suitably used for an imaging device, such as a camera with an interchangeable lens and a camera with a non-interchangeable lens, and various optical devices such as a microscope device such as a fluorescence microscope and a multi-photon microscope. The optical device is not limited to the imaging device and the microscope described above, and also includes a telescope, a binocular, a laser range finder, a projector, and the like, which are not limited thereto. An example thereof will be described below.

<Imaging Device>

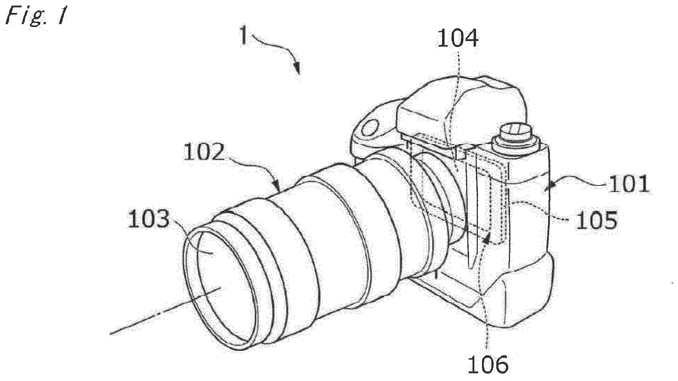

FIG. 1 is a perspective view illustrating one example of an optical device according to the present embodiment as an imaging device. An imaging device 1 is a so-called digital single-lens reflex camera (a lens-interchangeable camera), and a photographing lens 103 (an optical system) includes, as a base material, an optical element including the optical glass according to the present embodiment. A lens barrel 102 is mounted to a lens mount (not illustrated) of a camera body 101 in a removable manner. An image is formed with light, which passes through the lens 103 of the lens barrel 102, on a sensor chip (solid-state imaging elements) 104 of a multi-chip module 106 arranged on a back surface side of the camera body 101. The sensor chip 104 is a so-called bare chip such as a CMOS image sensor, and the multi-chip module 106 is, for example, a Chip On Glass (COG) type module including the sensor chip 104 being a bare chip mounted on a glass substrate 105.

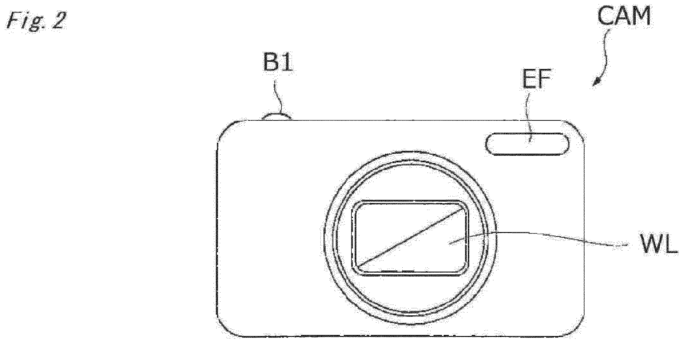

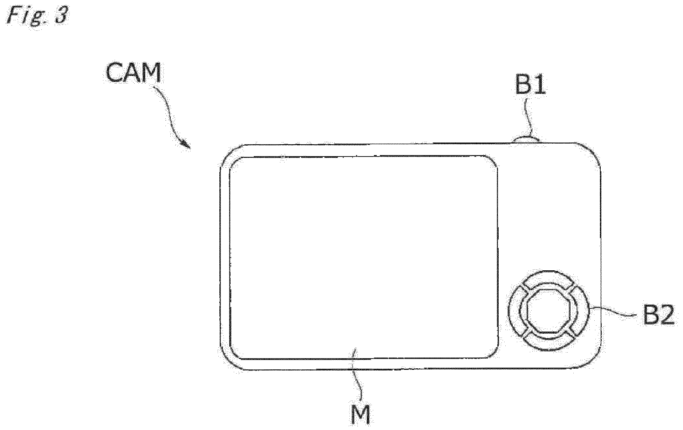

FIGS. 2 and 3 are schematic diagrams illustrating another example of the optical device according to the present embodiment as an imaging device. FIG. 2 illustrates a front view of an imaging device CAM, and FIG. 3 illustrates a back view of the imaging device CAM. The imaging device CAM is a so-called digital still camera (a fixed lens camera), and a photographing lens WL (an optical system) includes an optical element including the optical glass according to the present embodiment, as a base material.

When a power button (not illustrated) of the imaging device CAM is pressed, a shutter (not illustrated) of the photographing lens WL is opened, light from an object to be imaged (a body) is converged by the photographing lens WL and forms an image on imaging elements arranged on an image surface. An object image formed on the imaging elements is displayed on a liquid crystal monitor M arranged on the back of the imaging device CAM. A photographer decides composition of the object image while viewing the liquid crystal monitor M, then presses down a release button B1 to capture the object image with the imaging elements. The object image is recorded and stored in a memory (not illustrated).

An auxiliary light emitting unit EF that emits auxiliary light in a case that the object is dark and a function button B2 to be used for setting various conditions of the imaging device CAM and the like are arranged on the imaging device CAM.

A higher resolution, low chromatic aberration, and a smaller size are demanded for the optical system to be used in such digital camera or the like. In order to achieve such demands, it is effective to use glass with dispersion characteristics different from each other as the optical system. Particularly, glass that achieves both low dispersion and a higher partial dispersion ratio ($P_{g, F}$) is highly demanded. From such a viewpoint, the optical glass according to the present embodiment is suitable as a member of such optical equipment. Note that, in addition to the imaging device described above, examples of the optical equipment to which the present embodiment is applicable include a projector and the like. In addition to the lens, examples of the optical element include a prism and the like.

<Microscope>

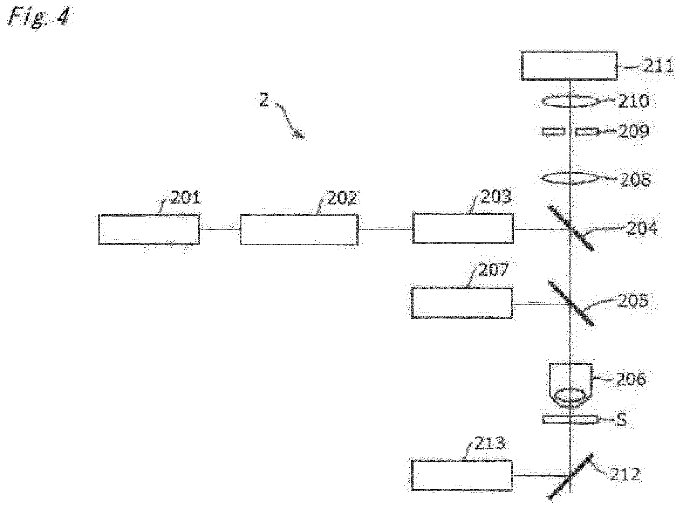

FIG. 4 is a block diagram illustrating an example of a configuration of a multi-photon microscope 2 according to the present embodiment. The multi-photon microscope 2 includes an objective lens 206, a condensing lens 208, and an image forming lens 210. At least one of the objective lens 206, the condensing lens 208, and the image forming lens 210 includes an optical element including, as a base material, the optical glass according to the present embodiment. Hereinafter, description is mainly made on the optical system of the multi-photon microscope 2.

A pulse laser device 201 emits ultrashort pulse light having, for example, a near infrared wavelength (approximately 1,000 nm) and a pulse width of a femtosecond unit (for example, 100 femtoseconds). In general, ultrashort pulse light immediately after being emitted from the pulse laser device 201 is linearly polarized light that is polarized in a predetermined direction.

A pulse division device 202 divides the ultrashort pulse light, increases a repetition frequency of the ultrashort pulse light, and emits the ultrashort pulse light.

A beam adjustment unit 203 has a function of adjusting a beam diameter of the ultrashort pulse light, which enters from the pulse division device 202, to a pupil diameter of the objective lens 206, a function of adjusting convergence and divergence angles of the ultrashort pulse light in order to correct chromatic aberration (a focus difference) on an axis of a wavelength of light emitted from a sample S and the wavelength of the ultrashort pulse light, a pre-chirp function (group velocity dispersion compensation function) providing inverse group velocity dispersion to the ultrashort pulse light in order to correct the pulse width of the ultrashort pulse light, which is increased due to group velocity dispersion at the time of passing through the optical system, and the like.

The ultrashort pulse light emitted from the pulse laser device 201 have a repetition frequency increased by the pulse division device 202, and is subjected to the above-mentioned adjustments by the beam adjustment unit 203. The ultrashort pulse light emitted from the beam adjustment unit 203 is reflected on a dichroic mirror 204 in a direction toward a dichroic mirror, passes through the dichroic mirror 205, is converged by the objective lens 206, and is radiated to the sample S. At this time, an observation surface of the sample S may be scanned with the ultrashort pulse light through use of scanning means (not illustrated).

For example, when the sample S is subjected to fluorescence imaging, a fluorescent pigment by which the sample S is dyed is subjected to multi-photon excitation in an irradiated region with the ultrashort pulse light and the vicinity thereof on the sample S, and fluorescence having a wavelength shorter than a near infrared wavelength of the ultrashort pulse light (hereinafter, also referred to "observation light") is emitted.

The observation light emitted from the sample S in a direction toward the objective lens 206 is collimated by the objective lens 206, and is reflected on the dichroic mirror 205 or passes through the dichroic mirror 205 depending on the wavelength.

The observation light reflected on the dichroic mirror 205 enters a fluorescence detection unit 207. For example, the fluorescence detection unit 207 is formed of a barrier filter, a photo multiplier tube (PMT), or the like, receives the observation light reflected on the dichroic mirror 205, and outputs an electronic signal depending on an amount of the light. The fluorescence detection unit 207 detects the observation light over the observation surface of the sample S, in conformity with the ultrashort pulse light scanning on the observation surface of the sample S.

Note that, all the observation light emitted from the sample S in a direction toward the objective lens 206 may be detected by the fluorescence detection unit 211 by excluding the dichroic mirror 205 from the optical path.

In that case, the observation light passing through the dichroic mirror 205 is de-scanned by scanning means (not illustrated), passes through the dichroic mirror 204, is converged by the condensing lens 208, passes through a pinhole 209 provided at a position substantially conjugate to a focal position of the objective lens 206, passes through the image forming lens 210, and enters a fluorescence detection unit 211.

For example, the fluorescence detection unit 211 is formed of a barrier filter, a PMT, or the like, receives the observation light forming an image on a light formed by the image forming lens 210 reception surface of the fluorescence detection unit 211, and outputs an electronic signal depending on an amount of the light. The fluorescence detection unit 211 detects the observation light over the observation surface of the sample S, in conformity with the ultrashort pulse light scanning on the observation surface of the sample S.

The observation light emitted from the sample S in a direction opposite to the objective lens 206 is reflected on a dichroic mirror 212, and enters a fluorescence detection unit 213. The fluorescence detection unit 113 is formed of, for example, a barrier filter, a PMT, or the like, receives the observation light reflected on the dichroic mirror 212, and outputs an electronic signal depending on an amount of the light. The fluorescence detection unit 213 detects the observation light over the observation surface of the sample S, in conformity with the ultrashort pulse light scanning on the observation surface of the sample S.

The electronic signals output from the fluorescence detection units 207, 211, and 213 are input to, for example, a computer (not illustrated). The computer is capable of generating an observation image, displaying the generated observation image, storing data on the observation image, based on the input electronic signals.

<Cemented Lens>

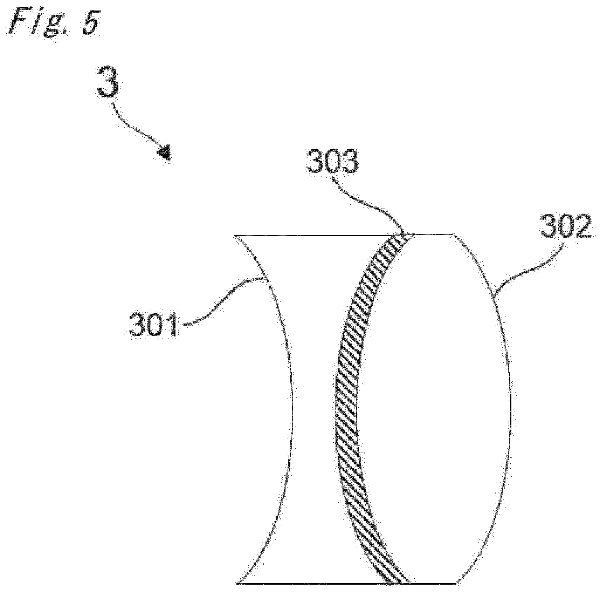

FIG. 5 is a schematic diagram illustrating one example of a cemented lens according to the present embodiment. A cemented lens 3 is a compound lens including a first lens element 301 and a second lens element 302. The optical glass according to the present embodiment is used as at least one of the first lens element and the second lens element. The first lens element and the second lens element are joined through intermediation with a joining member 303. As the joining member 303, a publicly known adhesive agent or the like may be used. Note that, the "lens element" refers to each lens constituting a single lens or a cemented lens.

The cemented lens according to the present embodiment is effective in view of correction of chromatic aberration, and can be used suitably for the optical element, the optical system, and the optical device that are described above and the like. Furthermore, the optical system including the cemented lens can be used suitably for, especially, an interchangeable camera lens and an optical device. Note that, in the aspect described above, description is made on the cemented lens using the two lens elements. The present invention is however not limited thereto, and a cemented lens using three or more lens elements may be used. When the cemented lens uses three or more lens elements, it is only required that at least one of the three or more lens elements be formed by using the optical glass according to the present embodiment.

Examples

Next, description is made on Examples in the present invention and Comparative Examples. Note that, the present invention is not limited thereto.

<Production of Optical Glasses>

The optical glasses in each example and each comparative example were produced by the following procedures. First, glass raw materials selected from oxides, hydroxides, phosphate compounds (phosphates, orthophosphoric acids, and the like), carbonates, nitrates, and the like were weighed so as to obtain the compositions (mass%) illustrated in each table. Next, the weighed raw materials were mixed and put in a platinum crucible, melted at a temperature of from 1,100 to 1,350 degrees Celsius, and uniformed by stirring. After defoaming, the resultant was lowered to an appropriate temperature, poured in a mold, annealed, and molded. In this manner, each sample was obtained.

<Evaluation of Physical Properties>

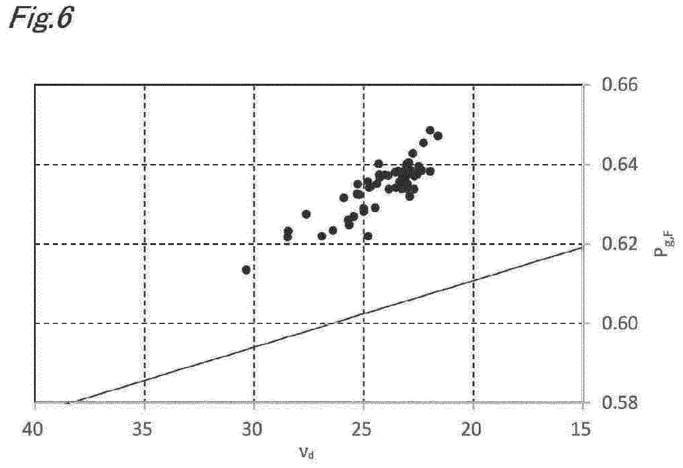

FIG. 6 is a graph in which $P_{g,F}$ and $\nu_d$ of Examples and Comparative Examples are plotted.

Refractive Index ($n_d$) and Abbe Number ($\nu_d$)

The refractive index ($n_d$) and the abbe number ($\nu_d$) in each of the samples were measured and calculated through use of a refractive index measuring instrument (KPR-2000 manufactured by Shimadzu Device Corporation). $n_d$ indicates a refractive index of the glass with respect to light of 587.562 nm. $\nu_d$ was obtained based on Expression (1) given below. $n_c$ and $n_F$ indicates refractive indexes of the glass with respect to light having a wavelength of 656.273 nm and light having a wavelength of 486.133 nm, respectively.

$$\nu_d = (n_d - 1)/(n_F - n_C) \ \ldots \ (1)$$

Partial Dispersion Ratio ($P_{g,F}$)

The partial dispersion ratio ($P_{g,F}$) in each of the samples indicates a ratio of partial dispersion ($n_g - n_F$) to main dispersion ($n_F - n_c$), and was obtained based on Expression (2) given below. $n_g$ indicates a refractive index of the glass with respect to light having a wavelength of 435.835 nm. A value of the partial dispersion ratio ($P_{g,F}$) was truncated to the third decimal place.

$$P_{g,F} = (n_g - n_F)/(n_F - n_C) \ \ldots \ (2)$$

Abnormal Dispersibility ($\Delta P_{g,F}$)

The abnormal dispersibility ($\Delta P_{g,F}$) of each sample indicates a deviation from a partial dispersion ratio standard line with reference to two types of glass of F2 and K7 as glass having normal dispersion. In other words, on coordinates with a partial dispersion ratio ($P_{g,F}$) as a vertical axis and an abbe number $\nu_d$ as a horizontal axis, a difference in ordinate between a straight line connecting two types of glass and a value of glass to be compared is a deviation of the partial dispersion ratio, i.e., abnormal dispersibility ($\Delta P_{g,F}$). In the coordinate system described above, when a value of the partial dispersion ratio is located above the straight line connecting the types of glass as a reference, glass indicates positive abnormal dispersibility ($+\Delta P_{g,F}$), and when the value is located below the straight line, glass indicates negative abnormal dispersibility ($-\Delta P_{g,F}$). Note that, the abbe number $\nu_d$ and the partial dispersion ratio (Pg,F) of F2 and K7 are as follows.

F2: abbe number $\nu$d = 36.33, partial dispersion ratio (Pg,F) = 0.5834
K7: abbe number $\nu$d = 60.47, partial dispersion ratio (Pg,F) = 0.5429
A value of abnormal dispersibility ($\Delta P_{g,F}$) is truncated to the third decimal place.

$$\Delta P_{g,F} = P_{g,F} - (-0.0016777 \times \nu_d + 0.6443513) \qquad (3)$$

Tables 1 to 11 illustrate a composition of components by mass% in terms of an oxide and evaluation results of physical properties for optical glass of Examples and Comparative Examples. "$\Sigma A_2O$" in Expressions indicates a total content rate of $Li_2O$, $Na_2O$, and $K_2O$ (A = Li, Na, K). "$\Sigma EO$" in Expressions indicates a total content rate of MgO, CaO, SrO, BaO, and ZnO (E = Mg, Ca, Sr, Ba, Zn). In the first to third comparative examples, the optical glass could not be obtained, and thus physical properties were "unmeasurable".

[Table 1]

| MASS % | EXAMPLE 1 | EXAMPLE 2 | EXAMPLE 3 | EXAMPLE A | EXAMPLE 5 | EXAMPLE 6 |
|---|---|---|---|---|---|---|
| $P_2O_5$ | 35.25 | 34.54 | 32.62 | 35.11 | 30.71 | 36.47 |
| $SiO_2$ | | | | | | |
| $B_2O_3$ | | | | | | |
| $Li_2O$ | 0.99 | 0.97 | 0.92 | | | |
| $Na_2O$ | 11.51 | 11.28 | 10.65 | 11.92 | 10.03 | 12.38 |
| $K_2O$ | 5.90 | 5.78 | 5.46 | 5.18 | 5.14 | 5.38 |
| $MgO$ | | | | | | |
| $CaO$ | | | | | | |
| $SrO$ | | | | | | |
| $BaO$ | | | | | | |
| $ZnO$ | | | | | | |
| $Al_2O_3$ | 1.81 | 1.77 | 1.67 | 1.59 | 1.57 | 1.65 |
| $TiO_2$ | 20.57 | 20.16 | 17.09 | 16.23 | 16.09 | 16.85 |
| $ZrO_2$ | | | | | | |
| $Nb_2O_5$ | | | | | | |
| $Sb_2O_3$ | 0.09 | 0.09 | 0.09 | 0.08 | 0.08 | 0.09 |
| $Ta_2O_5$ | | | | | | |
| $Y_2O_3$ | | | | | | |
| $La_2O_3$ | | | | | | |
| $Gd_2O_3$ | | | | | | |
| $WO_3$ | 7.80 | 5.66 | 9.09 | 8.63 | 15.28 | 12.80 |
| $Bi_2O_3$ | 16.08 | 19.75 | 22.41 | 21.27 | 21.10 | 14.39 |
| TOTAL | 100.00 | 100.00 | 100.00 | 100.00 | 100.00 | 100.00 |
| $n_d$ | 1.76276 | 1.76663 | 1.77271 | 1.75803 | 1.78911 | 1.74422 |
| $v_d$ | 23.06 | 23.25 | 23.37 | 23.44 | 22.50 | 23.56 |

(continued)

| MASS % | EXAMPLE 1 | EXAMPLE 2 | EXAMPLE 3 | EXAMPLE A | EXAMPLE 5 | EXAMPLE 6 |
|---|---|---|---|---|---|---|
| $Pg_{,F}$ | 0.639 | 0.637 | 0.636 | 0.638 | 0.639 | 0.638 |
| $\triangle P_{g,F}$ | 0.034 | 0.032 | 0.030 | 0.033 | 0.033 | 0.033 |
| $\Sigma\ A_2O$ | 18.40 | 18.03 | 17.03 | 17.10 | 15.17 | 17.76 |
| $\Sigma\ EO$ | | | | | | |
| $TiO_2/P_2O_5$ | 0.58 | 0.58 | 0.52 | 0.46 | 0.52 | 0.46 |
| $Al_2O_3/TiO_2$ | 0.09 | 0.09 | 0.10 | 0.10 | 0.10 | 0.10 |
| $B_2O_3/P_2O_5$ | | | | | | |
| $TiO_2/(P_2O_5+B_2O_3+Al_2O_3)$ | 0.56 | 0.56 | 0.50 | 0.44 | 0.50 | 0.44 |
| $TiO_2/(TiO_2+Nb_2O_5+WO_3+ Bi_2O_3+Ta_2O_5)$ | 0.46 | 0.44 | 0.35 | 0.35 | 0.31 | 0.38 |
| $(BaO+TiO_2)/P_2O_5$ | 0.58 | 0.58 | 0.52 | 0.46 | 0.52 | 0.46 |
| $(BaO+TiO_2+Nb_2O_5+Ta_2O_5+ WO_3+Bi_2O_3)/ (P_2O_5+B_2O_3+SiO_2+Al_2O_3)$ | 1.20 | 1.25 | 1.42 | 1.26 | 1.63 | 1.16 |
| $\Sigma\ A_2O/TiO_2$ | 0.89 | 0.89 | 1.00 | 1.05 | 0.94 | 1.05 |
| $\Sigma\ EO/ \Sigma\ A_2O$ | | | | | | |

[Table 2]

| MASS % | EXAMPLE 7 | EXAMPLE 8 | EXAMPLE 9 | EXAMPLE 10 | EXAMPLE 11 | EXAMPLE 12 |
|---|---|---|---|---|---|---|
| $P_2O_5$ | 37.93 | 30.35 | 33.24 | 29.67 | 38.86 | 36.59 |
| $SiO_2$ | | | | | | |
| $B_2O_3$ | | | | | | |
| $Li_2O$ | | | 0.94 | | 1.62 | 2.90 |
| $Na_2O$ | 12.88 | 9.91 | 14.51 | 7.41 | 12.69 | 15.98 |
| $K_2O$ | 5.60 | 5.08 | | 4.97 | 6.50 | |
| $MgO$ | | | | | | |
| $CaO$ | | | | | | |
| $SrO$ | | | | | | |
| $BaO$ | | | | 5.64 | | |
| $ZnO$ | | | | | | |
| $Al_2O_3$ | 1.71 | 1.55 | 1.70 | 1.52 | | |
| $TiO_2$ | 17.53 | 15.31 | 17.42 | 15.55 | 21.88 | 19.18 |
| $ZrO_2$ | | | | | | |
| $Nb_2O_5$ | | | | | | |
| $Sb_2O_3$ | 0.09 | 0.08 | 0.09 | 0.08 | 0.10 | 0.10 |
| $Ta_2O_5$ | | | | | | |
| $Y_2O_3$ | | | | | | |
| $La_2O_3$ | | | | | | |
| $Gd_2O_3$ | | | | | | |
| $WO_3$ | 17.31 | 16.85 | 9.27 | 14.77 | | |
| $Bi_2O_3$ | 6.95 | 20.86 | 22.84 | 20.39 | 18.34 | 25.27 |
| TOTAL | 100.00 | 100.00 | 100.00 | 100.00 | 100.00 | 100.00 |
| $n_d$ | 1.72734 | 1.78605 | 1.77604 | 1.80301 | 1.75238 | 1.75526 |
| $v_d$ | 23.89 | 22.69 | 23.54 | 22.62 | 23.10 | 24.47 |

(continued)

| MASS % | EXAMPLE 7 | EXAMPLE 8 | EXAMPLE 9 | EXAMPLE 10 | EXAMPLE 11 | EXAMPLE 12 |
|---|---|---|---|---|---|---|
| $P_{g,F}$ | 0.637 | 0.637 | 0.634 | 0.638 | 0.639 | 0.629 |
| $\triangle P_{g,F}$ | 0.033 | 0.031 | 0.029 | 0.031 | 0.033 | 0.026 |
| $\Sigma\ A_2O$ | 18.48 | 14.99 | 15.45 | 12.38 | 20.82 | 18.87 |
| $\Sigma\ EO$ | | | | 5.64 | | |
| $TiO_2/P_2O_5$ | 0.46 | 0.50 | 0.52 | 0.52 | 0.56 | 0.52 |
| $Al_2O_3/TiO_2$ | 0.10 | 0.10 | 0.10 | 0.10 | | |
| $B_2O_3/P_2O_5$ | | | | | | |
| $TiO_2/(P_2O_5+B_2O_3+Al_2O_3)$ | 0.44 | 0.48 | 0.50 | 0.50 | 0.56 | 0.52 |
| $TiO_2/(TiO_2+Nb_2O_5+WO_3+Bi_2O_3+Ta_2O_5)$ | 0.42 | 0.29 | 0.35 | 0.31 | 0.54 | 0.43 |
| $(BaO+TiO_2)/P_2O_5$ | 0.46 | 0.50 | 0.52 | 0.71 | 0.56 | 0.52 |
| $(BaO+TiO_2+Nb_2O_5+Ta_2O_5+WO_3+Bi_2O_3)/(P_2O_s+B_2O_3+SiO_2+Al_2O_3)$ | 1.05 | 1.66 | 1.42 | 1.81 | 1.03 | 1.21 |
| $\Sigma\ A_2O/TiO_2$ | 1.05 | 0.98 | 0.89 | 0.80 | 0.95 | 0.98 |
| $\Sigma\ EO/\Sigma\ A_2O$ | | | | 0.46 | | |

[Table 3]

| MASS % | EXAMPLE 13 | EXAMPLE 14 | EXAMPLE 15 | EXAMPLE 16 | EXAMPLE 17 | EXAMPLE 18 |
|---|---|---|---|---|---|---|
| $P_2O_5$ | 28.71 | 42.65 | 36.90 | 42.21 | 29.37 | 29.41 |
| $SiO_2$ | | | 1.09 | | | |
| $B_2O_3$ | | | | | 1.01 | |
| $Li_2O$ | | 2.47 | 1.54 | | | |
| $Na_2O$ | 4.97 | | 9.35 | 14.33 | 7.34 | 7.35 |
| $K_2O$ | 4.80 | 18.83 | 6.17 | 6.23 | 4.92 | 4.92 |
| $MgO$ | | | | | | 0.88 |
| $CaO$ | | | | | | |
| $SrO$ | | | | | | |
| $BaO$ | 10.91 | 11.23 | 6.66 | | 5.58 | 5.59 |
| $ZnO$ | | 2.22 | | 2.14 | | |
| $Al_2O_3$ | 1.47 | 1.50 | | | 1.50 | 1.51 |
| $TiO_2$ | 15.05 | 15.55 | 20.77 | 22.19 | 15.40 | 15.42 |
| $ZrO_2$ | | | | | | |
| $Nb_2O_5$ | | | | | | |
| $Sb_2O_3$ | 0.08 | 0.11 | 0.10 | 0.10 | 0.08 | 0.08 |
| $Ta_2O_5$ | | | | | | |
| $Y_2O_3$ | | | | | | |
| $La_2O_3$ | | | | | | |
| $Gd_2O_3$ | | | | | | |
| $WO_3$ | 14.29 | | | | 14.62 | 14.64 |
| $Bi_2O_3$ | 19.73 | 5.43 | 17.41 | 12.80 | 20.18 | 20.21 |
| TOTAL | 100.00 | 100.00 | 100.00 | 100.00 | 100.00 | 100.00 |
| $n_d$ | 1.81066 | 1.67374 | 1.76767 | 1.73607 | 1.79468 | 1.79736 |
| $v_d$ | 23.02 | 27.62 | 22.94 | 22.88 | 23.17 | 23.06 |

(continued)

| MASS % | EXAMPLE 13 | EXAMPLE 14 | EXAMPLE 15 | EXAMPLE 16 | EXAMPLE 17 | EXAMPLE 18 |
|---|---|---|---|---|---|---|
| $P_{g,F}$ | 0.634 | 0.627 | 0.640 | 0.639 | 0.634 | 0.637 |
| $\triangle P_{g,F}$ | 0.028 | 0.029 | 0.035 | 0.033 | 0.029 | 0.031 |
| $\sum A_2O$ | 9.77 | 21.30 | 17.07 | 20.56 | 12.25 | 12.27 |
| $\sum EO$ | 10.91 | 13.46 | 6.66 | 2.14 | 5.58 | 6.47 |
| $TiO_2/P_2O_5$ | 0.52 | 0.36 | 0.56 | 0.53 | 0.52 | 0.52 |
| $Al_2O_3/TiO_2$ | 0.10 | 0.10 | | | 0.10 | 0.10 |
| $B_2O_3/P_2O_5$ | | | | | 0.03 | |
| $TiO_2/(P_2O_5+B_2O_3+Al_2O_3)$ | 0.50 | 0.35 | 0.56 | 0.53 | 0.48 | 0.50 |
| $TiO_2/(TiO_2+Nb_2O_5+WO_3+Bi_2O_3+Ta_2O_5)$ | 0.31 | 0.74 | 0.54 | 0.63 | 0.31 | 0.31 |
| $(BaO+TiO_2)/P_2O_5$ | 0.90 | 0.63 | 0.74 | 0.53 | 0.71 | 0.71 |
| $(BaO+TiO_2+Nb_2O_5+Ta_2O_5+WO_3+Bi_2O_3)/(P_2O_5+B_2O_3+SiO_2+Al_2O_3)$ | 1.99 | 0.73 | 1.18 | 0.83 | 1.75 | 1.81 |
| $\sum A_2O/TiO_2$ | 0.65 | 1.37 | 0.82 | 0.93 | 0.80 | 0.80 |
| $\sum EO / \sum A_2O$ | 1.12 | 0.63 | 0.39 | 0.10 | 0.46 | 0.53 |

[Table 4]

| MASS % | EXAMPLE 19 | EXAMPLE 20 | EXAMPLE 21 | EXAMPLE 22 | EXAMPLE 23 | EXAMPLE 24 |
|---|---|---|---|---|---|---|
| $P_2O_5$ | 29.31 | 29.01 | 29.41 | 29.11 | 28.74 | 29.19 |
| $SiO_2$ | | | | | | |
| $B_2O_3$ | | | | | | |
| $Li_2O$ | | | | | | |
| $Na_2O$ | 7.32 | 7.25 | 7.34 | 7.27 | 7.18 | 7.29 |
| $K_2O$ | 4.90 | 4.85 | 4.92 | 4.87 | 4.81 | 4.88 |
| MgO | | | | | | |
| CaO | 1.22 | | | | | |
| SrO | | 2.23 | | | | |
| BaO | 5.57 | 5.51 | 5.59 | 5.53 | 5.46 | 5.55 |
| ZnO | | | | | | |
| $Al_2O_3$ | 1.50 | 1.49 | 1.51 | 1.49 | 1.47 | 1.50 |
| $TiO_2$ | 15.36 | 15.21 | 15.41 | 15.25 | 15.06 | 15.30 |
| $ZrO_2$ | | | 0.90 | | | |
| $Nb_2O_5$ | | | | 1.92 | | |
| $Sb_2O_3$ | 0.08 | 0.08 | 0.08 | 0.08 | 0.08 | 0.08 |
| $Ta_2O_5$ | | | | | 3.15 | |
| $Y_2O_3$ | | | | | | 1.63 |
| $La_2O_3$ | | | | | | |
| $Gd_2O_3$ | | | | | | |
| $WO_3$ | 14.59 | 14.44 | 14.64 | 14.48 | 14.30 | 14.53 |
| $Bi_2O_3$ | 20.14 | 19.93 | 20.21 | 20.00 | 19.75 | 20.06 |
| TOTAL | 100.00 | 100.00 | 100.00 | 100.00 | 100.00 | 100.00 |
| $n_d$ | 1.79719 | 1.79614 | 1.79949 | 1.80754 | 1.80652 | 1.79792 |
| $\nu_d$ | 23.21 | 23.29 | 23.01 | 22.57 | 22.70 | 23.21 |

| MASS % | EXAMPLE 19 | EXAMPLE 20 | EXAMPLE 21 | EXAMPLE 22 | EXAMPLE 23 | EXAMPLE 24 |
|---|---|---|---|---|---|---|
| $P_{g,F}$ | 0.636 | 0.635 | 0.635 | 0.637 | 0.634 | 0.636 |
| $\triangle P_{g,F}$ | 0.031 | 0.030 | 0.029 | 0.031 | 0.027 | 0.030 |
| $\Sigma A_2O$ | 12.23 | 12.10 | 12.27 | 12.14 | 11.99 | 12.17 |
| $\Sigma EO$ | 6.79 | 7.75 | 5.59 | 5.53 | 5.46 | 5.55 |
| $TiO_2/P_2O_5$ | 0.52 | 0.52 | 0.52 | 0.52 | 0.52 | 0.52 |
| $Al_2O_3/TiO_2$ | 0.10 | 0.10 | 0.10 | 0.10 | 0.10 | 0.10 |
| $B_2O_3/P_2O_5$ | | | | | | |
| $TiO_2/(P_2O_5+B_2O_3+Al_2O_3)$ | 0.50 | 0.50 | 0.50 | 0.50 | 0.50 | 0.50 |
| $TiO_2/(TiO_2+Nb_2O_5+WO_3+Bi_2O_3+Ta_2O_5)$ | 0.31 | 0.31 | 0.31 | 0.30 | 0.29 | 0.31 |
| $(BaO+TiO_2)/P_2O_5$ | 0.71 | 0.71 | 0.71 | 0.71 | 0.71 | 0.71 |
| $(BaO+TiO_2+Nb_2O_5+Ta_2O_5+WO_3+Bi_2O_3)/(P_2O_5+B_2O_3+SiO_2+Al_2O_3)$ | 1.81 | 1.81 | 1.81 | 1.87 | 1.91 | 1.81 |
| $\Sigma A_2O/TiO_2$ | 0.80 | 0.80 | 0.80 | 0.80 | 0.80 | 0.80 |
| $\Sigma EO/\Sigma A_2O$ | 0.56 | 0.64 | 0.46 | 0.46 | 0.46 | 0.46 |

EP 4 245 735 A1

[Table 5]

| MASS % | EXAMPLE 25 | EXAMPLE 26 | EXAMPLE 27 | EXAMPLE 28 | EXAMPLE 29 | EXAMPLE 30 |
|---|---|---|---|---|---|---|
| $P_2O_5$ | 28.90 | 29.36 | 28.73 | 28.66 | 39.48 | 31.88 |
| $SiO_2$ | | | | | | |
| $B_2O_3$ | | | | | | |
| $Li_2O$ | | | | | | |
| $Na_2O$ | 7.22 | 7.33 | 7.17 | 7.16 | 16.31 | 7.96 |
| $K_2O$ | 4.84 | 4.91 | 4.81 | 4.80 | 6.61 | 5.34 |
| MgO | | | | | | |
| CaO | | | | | | |
| SrO | | | | | | |
| BaO | 5.49 | 5.58 | 5.46 | 5.45 | 3.51 | 6.06 |
| ZnO | | | | | 2.05 | |
| $Al_2O_3$ | 1.48 | 1.50 | 1.47 | 1.47 | 1.39 | 1.63 |
| $TiO_2$ | 15.15 | 15.39 | 15.06 | 15.02 | 17.98 | 16.71 |
| $ZrO_2$ | | | | | | |
| $Nb_2O_5$ | | | 4.92 | 15.01 | | |
| $Sb_2O_3$ | 0.08 | 0.08 | | | 0.10 | |
| $Ta_2O_5$ | | | | | | |
| $Y_2O_3$ | | | | | | |
| $La_2O_3$ | | 1.07 | | | | |
| $Gd_2O_3$ | 2.60 | | | | | |
| $WO_3$ | 14.38 | 14.61 | 12.65 | 2.74 | | 15.87 |
| $Bi_2O_3$ | 19.86 | 20.17 | 19.74 | 19.70 | 12.56 | 14.55 |
| TOTAL | 100.00 | 100.00 | 100.00 | 100.00 | 100.00 | 100.00 |
| $n_d$ | 1.80073 | 1.80153 | 1.81591 | 1.83290 | 1.69631 | 1.78560 |
| $\nu_d$ | 23.13 | 22.91 | 22.36 | 21.96 | 25.90 | 22.76 |

(continued)

| MASS % | EXAMPLE 25 | EXAMPLE 26 | EXAMPLE 27 | EXAMPLE 28 | EXAMPLE 29 | EXAMPLE 30 |
|---|---|---|---|---|---|---|
| $P_{g,F}$ | 0.634 | 0.632 | 0.639 | 0.638 | 0.632 | 0.643 |
| $\triangle P_{g,F}$ | 0.028 | 0.026 | 0.032 | 0.031 | 0.031 | 0.037 |
| $\Sigma A_2O$ | 12.06 | 12.24 | 11.98 | 11.96 | 22.92 | 13.30 |
| $\Sigma EO$ | 5.49 | 5.58 | 5.46 | 5.45 | 5.56 | 6.06 |
| $TiO_2/P_2O_5$ | 0.52 | 0.52 | 0.52 | 0.52 | 0.46 | 0.52 |
| $Al_2O_3/TiO_2$ | 0.10 | 0.10 | 0.10 | 0.10 | 0.08 | 0.10 |
| $B_2O_3/P_2O_5$ | | | | | | |
| $TiO_2/(P_2O_5+B_2O_3+Al_2O_3)$ | 0.50 | 0.50 | 0.50 | 0.50 | 0.44 | 0.50 |
| $TiO_2/(TiO_2+Nb_2O_6+WO_3+Bi_2O_3+Ta_2O_5)$ | 0.31 | 0.31 | 0.29 | 0.29 | 0.59 | 0.35 |
| $(BaO+TiO_2)/P_2O_5$ | 0.71 | 0.71 | 0.71 | 0.71 | 0.54 | 0.71 |
| $(BaO+TiO_2+Nb_2O_5+Ta_2O_5+WO_3+Bi_2O_3)/(P_2O_5+B_2O_3+SiO_2+Al_2O_3)$ | 1.81 | 1.81 | 1.91 | 1.92 | 0.83 | 1.59 |
| $\Sigma A_2O/TiO_2$ | 0.80 | 0.80 | 0.80 | 0.80 | 1.27 | 0.80 |
| $\Sigma EO/\Sigma A_2O$ | 0.46 | 0.46 | 0.46 | 0.46 | 0.24 | 0.46 |

[Table 6]

| MASS % | EXAMPLE 31 | EXAMPLE 32 | EXAMPLE 33 | EXAMPLE 34 | EXAMPLE 35 | EXAMPLE 36 |
|---|---|---|---|---|---|---|
| $P_2O_5$ | 32.05 | 34.22 | 29.04 | 41. 51 | 43.26 | 35.57 |
| $SiO_2$ | | | | | | |
| $B_2O_3$ | | | | | | 4.20 |
| $Li_2O$ | | 1.43 | | | | |
| $Na_2O$ | 8.00 | 9.67 | 7.25 | 17.15 | 14.85 | 16.37 |
| $K_2O$ | 5.36 | 4.21 | 4.86 | 6.95 | 7.24 | 7.38 |
| $MgO$ | | | | | | |
| $CaO$ | | | | | | |
| $SrO$ | | | | | | |
| $BaO$ | 6.09 | 6.18 | 5.52 | 3.69 | 3.85 | 5.46 |
| $ZnO$ | | | | 2.16 | 2.25 | 1.48 |
| $Al_2O_3$ | 1.64 | | 3.69 | 4.35 | 3.50 | 4.63 |
| $TiO_2$ | 16.80 | 17.98 | 15.22 | 18.91 | 19.71 | 19.30 |
| $ZrO_2$ | | | | | | |
| $Nb_2O_5$ | 5.91 | 6.43 | | | | |
| $Sb_2O_3$ | | | | | | |
| $Ta_2O_5$ | | | | | | |
| $Y_2O_3$ | | | | | | |
| $La_2O_3$ | | | | | | |
| $Gd_2O_3$ | | | | | | |
| $WO_3$ | 3.98 | 3.74 | 14.45 | | | |
| $Bi_2O_3$ | 20.17 | 16.15 | 19.96 | 5.28 | 5.34 | 5.62 |
| TOTAL | 100.00 | 100.00 | 100.00 | 100.00 | 100.00 | 100.00 |
| $n_d$ | 1.79432 | 1.78880 | 1.78530 | 1.66317 | 1.68190 | 1.65741 |
| $\nu_d$ | 23.06 | 22.85 | 23.85 | 28.45 | 26.40 | 30.35 |

(continued)

| MASS % | EXAMPLE 31 | EXAMPLE 32 | EXAMPLE 33 | EXAMPLE 34 | EXAMPLE 35 | EXAMPLE 36 |
|---|---|---|---|---|---|---|
| $P_{g,F}$ | 0.636 | 0.638 | 0.634 | 0.623 | 0.623 | 0.614 |
| $\triangle P_{g,F}$ | 0.030 | 0.032 | 0.029 | 0.027 | 0.023 | 0.020 |
| $\Sigma A_2O$ | 13.37 | 15.31 | 12.11 | 24.10 | 22.09 | 23.75 |
| $\Sigma EO$ | 6.09 | 6.18 | 5.52 | 5.85 | 6.10 | 6.94 |
| $TiO_2/P_2O_5$ | 0.52 | 0.53 | 0.52 | 0.46 | 0.46 | 0.54 |
| $Al_2O_3/TiO_2$ | 0.10 | | 0.24 | 0.23 | 0.18 | 0.24 |
| $B_2O_3/P_2O_5$ | | | | | | 0.12 |
| $TiO_2/(P_2O_5+B_2O_3+Al_2O_3)$ | 0.50 | 0.53 | 0.47 | 0.41 | 0.42 | 0.43 |
| $TiO_2/(TiO_2+Nb_2O_5+WO_3+Bi_2O_3+Ta_2O_5)$ | 0.36 | 0.41 | 0.31 | 0.78 | 0.79 | 0.77 |
| $(BaO+TiO_2)/P_2O_5$ | 0.71 | 0.71 | 0.71 | 0.54 | 0.54 | 0.70 |
| $(BaO+TiO_2+Nb_2O_5+Ta_2O_5+WO_3+Bi_2O_3)/(P_2O_5+B_2O_3+SiO_2+Al_2O_3)$ | 1.57 | 1.48 | 1.68 | 0.61 | 0.62 | 0.68 |
| $\Sigma A_2O/TiO_2$ | 0.80 | 0.85 | 0.80 | 1.27 | 1.12 | 1.23 |
| $\Sigma EO/\Sigma A_2O$ | 0.46 | 0.40 | 0.46 | 0.24 | 0.28 | 0.29 |

[Table 7]

| MASS % | EXAMPLE 37 | EXAMPLE 38 | EXAMPLE 39 | EXAMPLE 40 | EXAMPLE 41 | EXAMPLE 42 |
|---|---|---|---|---|---|---|
| $P_2O_5$ | 39.58 | 43.53 | 36.17 | 40.33 | 41.34 | 36.67 |
| $SiO_2$ | | | | | | |
| $B_2O_3$ | | | | | | |
| $Li_2O$ | | 1.82 | | 1.69 | 2.67 | 2.37 |
| $Na_2O$ | 15.24 | 14.21 | 13.77 | 13.17 | 15.92 | 14.12 |
| $K_2O$ | 6.62 | 7.28 | 6.05 | 6.75 | 3.24 | 2.87 |
| $MgO$ | | | | | | |
| $CaO$ | | | | | | |
| $SrO$ | | | | | | |
| $BaO$ | 3.52 | | | | | |
| $ZnO$ | 2.06 | | | | | |
| $Al_2O_3$ | 1.84 | | 2.11 | | 1.92 | 1.70 |
| $TiO_2$ | 20.55 | 28.03 | 22.88 | 24.45 | 20.06 | 20.04 |
| $ZrO_2$ | | | | | | |
| $Nb_2O_5$ | | | 4.98 | | | |
| $Sb_2O_3$ | 0.11 | 0.12 | 0.10 | 0.11 | 0.11 | 0.10 |
| $Ta_2O_5$ | | | | | | |
| $Y_2O_3$ | | | | | | |
| $La_2O_3$ | | | | | | |
| $Gd_2O_3$ | | | | | | |
| $WO_3$ | | | 8.89 | | | |
| $Bi_2O_3$ | 10.50 | 5.02 | 5.04 | 13.50 | 14.75 | 22.14 |
| TOTAL | 100.00 | 100.00 | 100.00 | 100.00 | 100.00 | 100.00 |
| $n_d$ | 1.70813 | 1.74456 | 1.74983 | 1.75529 | 1.71684 | 1.74388 |
| $v_d$ | 25.27 | 21.97 | 23.03 | 22.27 | 25.21 | 25.00 |

(continued)

| MASS % | EXAMPLE 37 | EXAMPLE 38 | EXAMPLE 39 | EXAMPLE 40 | EXAMPLE 41 | EXAMPLE 42 |
|---|---|---|---|---|---|---|
| $P_{g,F}$ | 0.635 | 0.649 | 0.640 | 0.645 | 0.632 | 0.628 |
| $P_{g,F}$ | 0.033 | 0.041 | 0.034 | 0.038 | 0.030 | 0.026 |
| $\Sigma A_2O$ | 21.86 | 23.32 | 19.82 | 21.61 | 21.83 | 19.36 |
| $\Sigma EO$ | 5.58 | | | | | |
| $TiO_2/P_2O_5$ | 0.52 | 0.64 | 0.63 | 0.61 | 0.49 | 0.55 |
| $Al_2O_3/TiO_2$ | 0.09 | | 0.09 | | 0.10 | 0.08 |
| $B_2O_3/P_2O_5$ | | | | | | |
| $TiO_2/(P_2O_5+B_2O_3+Al_2O_3)$ | 0.50 | 0.64 | 0.60 | 0.61 | 0.46 | 0.52 |
| $TiO_2/(TiO_2+Nb_2O_5+WO_3+Bi_2O_3+Ta_2O_5)$ | 0.66 | 0.85 | 0.55 | 0.64 | 0.58 | 0.48 |
| $(BaO+TiO_2)/P_2O_5$ | 0.61 | 0.64 | 0.63 | 0.61 | 0.49 | 0.55 |
| $(BaO+TiO_2+Nb_2O_5+Ta_2O_5+WO_3+Bi_2O_3)/(P_2O_5+B_2O_3+SiO_2+Al_2O_3)$ | 0.83 | 0.76 | 1.09 | 0.94 | 0.80 | 1.10 |
| $\Sigma A_2O/TiO_2$ | 1.06 | 0.83 | 0.87 | 0.88 | 1.09 | 0.97 |
| $\Sigma EO/\Sigma A_2O$ | 0.26 | | | | | |

[Table 8]

| MASS % | EXAMPLE 43 | EXAMPLE 44 | EXAMPLE 45 | EXAMPLE 46 | EXAMPLE 47 | EXAMPLE 48 |
|---|---|---|---|---|---|---|
| $P_2O_5$ | 42.54 | 40.52 | 36.93 | 37.05 | 42.38 | 35.68 |
| $SiO_2$ | | | | | | |
| $B_2O_3$ | | | | | | 3.51 |
| $Li_2O$ | | | 1.54 | 1.55 | 1.56 | 2.77 |
| $Na_2O$ | 17.58 | 16.75 | 12.06 | 12.10 | 14.39 | 16.50 |
| $K_2O$ | 7.12 | 6.78 | 6.18 | 6.20 | 6.26 | 3.36 |
| $MgO$ | | | | | | |
| $CaO$ | | | | | | |
| $SrO$ | | | | | | |
| $BaO$ | | | | | | |
| $ZnO$ | 4.22 | 4.02 | | | | |
| $Al_2O_3$ | | | | | | 1.99 |
| $TiO_2$ | 23.25 | 20.03 | 21.21 | 21.28 | 30.26 | 20.79 |
| $ZrO_2$ | | | | | | |
| $Nb_2O_5$ | | 4.95 | | | | |
| $Sb_2O_3$ | 0.11 | 0.11 | 0.10 | 0.10 | 0.10 | 0.11 |
| $Ta_2O_5$ | | | 9.61 | 15.43 | | |
| $Y_2O_3$ | | | | | | |
| $La_2O_3$ | | | | | | |
| $Gd_2O_3$ | | | | | | |
| $WO_3$ | | 1.82 | | | | |
| $Bi_2O_3$ | 5.19 | 5.03 | 12.36 | 6.30 | 5.05 | 15.28 |
| TOTAL | 100.00 | 100.00 | 100.00 | 100.00 | 100.00 | 100.00 |
| $n_d$ | 1.70204 | 1.70692 | 1.76027 | 1.75265 | 1.75884 | 1.70707 |
| $\nu_d$ | 24. 32 | 24.75 | 22.93 | 23.27 | 21.62 | 26.91 |

| MASS % | EXAMPLE 43 | EXAMPLE 44 | EXAMPLE 45 | EXAMPLE 46 | EXAMPLE 47 | EXAMPLE 48 |
|---|---|---|---|---|---|---|
| $P_{g,F}$ | 0.640 | 0.634 | 0.639 | 0.634 | 0.647 | 0.622 |
| $\triangle P_{g,F}$ | 0.037 | 0.031 | 0.033 | 0.029 | 0.039 | 0.023 |
| $\sum A_2O$ | 24.70 | 23.53 | 19.78 | 19.85 | 22.21 | 22.63 |
| $\sum EO$ | 4.22 | 4.02 | | | | |
| $TiO_2/P_2O_5$ | 0.55 | 0.49 | 0.57 | 0.57 | 0.71 | 0.58 |
| $Al_2O_3/TiO_2$ | | | | | | 0.10 |
| $B_2O_3/P_2O_5$ | | | | | | 0.10 |
| $TiO_2/(P_2O_5+B_2O_3+Al_2O_3)$ | 0.55 | 0.49 | 0.57 | 0.57 | 0.71 | 0.50 |
| $TiO_2/(TiO_2+Nb_2O_5+WO_3+Bi_2O_3+Ta_2O_5)$ | 0.82 | 0.63 | 0.49 | 0.49 | 0.86 | 0.58 |
| $(BaO+TiO_2)/P_2O_5$ | 0.55 | 0.49 | 0.57 | 0.57 | 0.71 | 0.58 |
| $(BaO+TiO_2+Nb_2O_5+Ta_2O_5+WO_3+Bi_2O_3)/(P_2O_5+B_2O_3+SiO_2+Al_2O_3)$ | 0.67 | 0.79 | 1.17 | 1.16 | 0.83 | 0.88 |
| $\sum A_2O/TiO_2$ | 1.06 | 1.17 | 0.93 | 0.93 | 0.73 | 1.09 |
| $\sum EO/\sum A_2O$ | 0.17 | 0.17 | | | | |

EP 4 245 735 A1

[Table 9]

| MASS % | EXAMPLE 49 | EXAMPLE 50 | EXAMPLE 51 | EXAMPLE 52 | EXAMPLE 53 | EXAMPLE 54 |
|---|---|---|---|---|---|---|
| $P_2O_5$ | 43.46 | 43.10 | 42.05 | 41.38 | 40.17 | 42.05 |
| $SiO_2$ | | | | | | 1.15 |
| $B_2O_3$ | | | | | | |
| $Li_2O$ | | | | | | |
| $Na_2O$ | 17.96 | 17.81 | 17.38 | 17.10 | 16.60 | 17.38 |
| $K_2O$ | 7.27 | 7.21 | 7.04 | 6.92 | 6.72 | 7.04 |
| $MgO$ | 2.14 | | | | | |
| $CaO$ | | 2.95 | | | | |
| $SrO$ | | | 5.31 | | | |
| $BaO$ | | | | | | |
| $ZnO$ | | | | 2.57 | 2.50 | 4.17 |
| $Al_2O_3$ | | | | | | |
| $TiO_2$ | 23.75 | 23.55 | 22.98 | 22.61 | 21.95 | 22.98 |
| $ZrO_2$ | | | | | | |
| $Nb_2O_5$ | | | | | | |
| $Sb_2O_3$ | 0.12 | 0.11 | 0.11 | 0.11 | 0.11 | 0.11 |
| $Ta_2O_5$ | | | | | | |
| $Y_2O_3$ | | | | 4.25 | | |
| $La_2O_3$ | | | | | | |
| $Gd_2O_3$ | | | | | 6.63 | |
| $WO_3$ | | | | | | |
| $Bi_2O_3$ | 5.30 | 5.26 | 5.13 | 5.05 | 5.33 | 5.13 |
| TOTAL | 100.00 | 100.00 | 100.00 | 100.00 | 100.00 | 100.00 |
| $n_d$ | 1.69980 | 1.69772 | 1.69810 | 1.69989 | 1.70469 | 1.70042 |
| $\nu_d$ | 24.27 | 24.80 | 24.82 | 25.46 | 25.30 | 24.40 |

(continued)

| MASS % | EXAMPLE 49 | EXAMPLE 50 | EXAMPLE 51 | EXAMPLE 52 | EXAMPLE 53 | EXAMPLE 54 |
|---|---|---|---|---|---|---|
| $P_{g,F}$ | 0.637 | 0.622 | 0.636 | 0.627 | 0.633 | 0.635 |
| $P_{g,F}$ | 0.033 | 0.019 | 0.033 | 0.025 | 0.031 | 0.032 |
| $\Sigma A_2O$ | 25.23 | 25.03 | 24.42 | 24.02 | 23.32 | 24.41 |
| $\Sigma EO$ | 2.14 | 2.95 | 5.31 | 2.57 | 2.50 | 4.17 |
| $TiO_2/P_2O_5$ | 0.55 | 0.55 | 0.55 | 0.55 | 0.55 | 0.55 |
| $Al_2O_3/TiO_2$ | | | | | | |
| $B_2O_3/P_2O_6$ | | | | | | |
| $TiO_2/(P_2O_5+B_2O_3+Al_2O_3)$ | 0.55 | 0.55 | 0.55 | 0.55 | 0.55 | 0.55 |
| $TiO_2/(TiO_2+Nb_2O_5+WO_3+Bi_2O_3+Ta_2O_5)$ | 0.82 | 0.82 | 0.82 | 0.82 | 0.80 | 0.82 |
| $(BaO+TiO_2)/P_2O_5$ | 0.55 | 0.55 | 0.55 | 0.55 | 0.55 | 0.55 |
| $(BaO+TiO_2+Nb_2O_5+Ta_2O_5+WO_3+Bi_2O_3)/(P_2O_5+B_2O_3+SiO_2+Al_2O_3)$ | 0.67 | 0.67 | 0.67 | 0.67 | 0.68 | 0.65 |
| $\Sigma A_2O/TiO_2$ | 1.06 | 1.06 | 1.06 | 1.06 | 1.06 | 1.06 |
| $\Sigma EO/\Sigma A_2O$ | 0.08 | 0.12 | 0.22 | 0.11 | 0.11 | 0.17 |

[Table 10]

| MASS % | EXAMPLE 55 | EXAMPLE 56 | EXAMPLE 57 | EXAMPLE 58 | EXAMPLE 59 | EXAMPLE 60 |
|---|---|---|---|---|---|---|
| $P_2O_5$ | 41.97 | 44.47 | 43.06 | 42.08 | 43.51 | 41.88 |
| $SiO_2$ | | | | | | |
| $B_2O_3$ | 1.33 | | | | | |
| $Li_2O$ | | 1.86 | | | | |
| $Na_2O$ | 17.35 | 19.42 | 17.80 | 17.39 | | 17.31 |
| $K_2O$ | 7.02 | | 7.21 | 7.04 | 19.21 | 7.01 |
| $MgO$ | | | | | 3.40 | |
| $CaO$ | | | | | | |
| $SrO$ | | | | | | |
| $BaO$ | | | | | | |
| $ZnO$ | 4.16 | 4.41 | 2.68 | 4.18 | 8.35 | 4.15 |
| $Al_2O_3$ | | | | | | |
| $TiO_2$ | 22.94 | 24.30 | 20.24 | 23.00 | 20.07 | 22.88 |
| $ZrO_2$ | | | | 1.06 | | |
| $Nb_2O_5$ | | | | | | |
| $Sb_2O_3$ | 0.11 | 0.12 | 0.11 | 0.11 | 0.12 | 0.11 |
| $Ta_2O_5$ | | | | | | |
| $Y_2O_3$ | | | | | | |
| $La_2O_3$ | | | 3.19 | | | 1.55 |
| $Gd_2O_3$ | | | | | | |
| $WO_3$ | | | | | | |
| $Bi_2O_3$ | 5.12 | 5.42 | 5.71 | 5.13 | 5.35 | 5.11 |
| TOTAL | 100.00 | 100.00 | 100.00 | 100.00 | 100.00 | 100.00 |
| $n_d$ | 1.69808 | 1.71941 | 1.68460 | 1.70538 | 1.68875 | 1.70164 |
| $\nu_d$ | 25.01 | 24.03 | 25.71 | 24.29 | 25.66 | 24.68 |

| MASS % | EXAMPLE 55 | EXAMPLE 56 | EXAMPLE 57 | EXAMPLE 58 | EXAMPLE 59 | EXAMPLE 60 |
|---|---|---|---|---|---|---|
| $P_{g,F}$ | 0.629 | 0.637 | 0.626 | 0.637 | 0.625 | 0.634 |
| $P_{g,F}$ | 0.027 | 0.033 | 0.025 | 0.034 | 0.023 | 0.031 |
| $\Sigma A_2O$ | 24.37 | 21.28 | 25.00 | 24.43 | 19.21 | 24.31 |
| $\Sigma EO$ | 4.16 | 4.41 | 2.68 | 4.18 | 11.74 | 4.15 |
| $TiO_2/P_2O_5$ | 0.55 | 0.55 | 0.47 | 0.55 | 0.46 | 0.55 |
| $Al_2O_3/TiO_2$ | | | | | | |
| $B_2O_3/P_2O_5$ | 0.03 | | | | | |
| $TiO_2/(P_2O_5+B_2O_3+Al_2O_3)$ | 0.53 | 0.55 | 0.47 | 0.55 | 0.46 | 0.55 |
| $TiO_2/(TiO_2+Nb_2O_5+WO_3+ Bi_2O_3+Ta_2O_5)$ | 0.82 | 0.82 | 0.78 | 0.82 | 0.79 | 0.82 |
| $(BaO+TiO_2)/P_2O_5$ | 0.55 | 0.55 | 0.47 | 0.55 | 0.46 | 0.55 |
| $(BaO+TiO_2+Nb_2O_5+Ta_2O_5+ WO_3+Bi_2O_3)/ (P_2O_5+B_2O_3+SiO_2+Al_2O_3)$ | 0.65 | 0.67 | 0.60 | 0.67 | 0.58 | 0.67 |
| $\Sigma A_2O/TiO_2$ | 1.06 | 0.88 | 1.24 | 1.06 | 0.96 | 1.06 |
| $\Sigma EO/\Sigma A_2O$ | 0.17 | 0.21 | 0.11 | 0.17 | 0.61 | 0.17 |

EP 4 245 735 A1

[Table 11]

| MASS % | EXAMPLE 61 | EXAMPLE 62 | COMPARATIVE EXAMPLE | COMPARATIVE EXAMPLE 2 | COMPARATIVE EXAMPLE 3 |
|---|---|---|---|---|---|
| $P_2O_5$ | 41.50 | 31.97 | 29.59 | 28.75 | 28.75 |
| $SiO_2$ | | | | | |
| $B_2O_3$ | | | | | |
| $Li_2O$ | | | | 0.39 | 0.39 |
| $Na_2O$ | 17.15 | 7.99 | 8.94 | 8.69 | 8.69 |
| $K_2O$ | 6.94 | 5.35 | 5.58 | 5.42 | 5.42 |
| $MgO$ | | | | | |
| $CaO$ | | | | | |
| $SrO$ | | | | | |
| $BaO$ | | 6.08 | 15.70 | 15.26 | 15.26 |
| $ZnO$ | 4.12 | | | | |
| $Al_2O_3$ | 4.82 | 6.01 | | 0.33 | 0.33 |
| $TiO_2$ | 20.41 | 12.66 | 40.12 | 40.53 | 40.53 |
| $ZrO_2$ | | | | 0.64 | 0.64 |
| $Nb_2O_5$ | | | | | |
| $Sb_2O_3$ | | | 0.08 | 0.08 | |
| $Ta_2O_5$ | | | | | |
| $Y_2O_3$ | | | | | |
| $La_2O_3$ | | | | | |
| $Gd_2O_3$ | | | | | |
| $WO_3$ | | 7.98 | | | |
| $Bi_2O_3$ | 5.06 | 21.97 | | | |
| TOTAL | 100.00 | 100.00 | 100.00 | 100.08 | 100.00 |
| $n_d$ | 1.66477 | 1.72560 | UNMEASURABLE | UNMEASURABLE | UNMEASURABLE |
| $v_d$ | 28.48 | 27.63 | UNMEASURABLE | UNMEASURABLE | UNMEASURABLE |

(continued)

| MASS % | EXAMPLE 61 | EXAMPLE 62 | COMPARATIVE EXAMPLE | COMPARATIVE EXAMPLE 2 | COMPARATIVE EXAMPLE 3 |
|---|---|---|---|---|---|
| $P_{g,F}$ | 0.622 | 0.619 | UNMEASURABLE | UNMEASURABLE | UNMEASURABLE |
| $P_{g,F}$ | 0.025 | 0.021 | UNMEASURABLE | UNMEASURABLE | UNMEASURABLE |
| $\sum A_2O$ | 24.09 | 13.34 | 14.51 | 14.49 | 14.49 |
| $\sum EO$ | 4.12 | 6.08 | 15.70 | 15.26 | 15.26 |
| $TiO_2/P_2O_5$ | 0.49 | 0.40 | 1.36 | 1.41 | 1.41 |
| $Al_2O_3/TiO_2$ | 0.24 | 0.47 | | 0.01 | 0.01 |
| $B_2O_3/P_2O_5$ | | | | | |
| $TiO_2/(P_2O_5+B_2O_3+Al_2O_3)$ | 0.44 | 0.33 | 1.36 | 1.39 | 1.39 |
| $TiO_2/(TiO_2+Nb_2O_5+WO_3+Bi_2O_3+Ta_2O_5)$ | 0.80 | 0.30 | 1.00 | 1.00 | 1.00 |
| $(BaO+TiO_2)/P_2O_5$ | 0.49 | 0.59 | 1.89 | 1.94 | 1.94 |
| $(BaO+TiO_2+Nb_2O_5+Ta_2O_5+WO_3+Bi_2O_3)/(P_2O_5+B_2O_3+SiO_2+Al_2O_3)$ | 0.55 | 1.28 | 1.89 | 1.92 | 1.92 |
| $\sum A_2O/TiO_2$ | 1.18 | 1.05 | 0.36 | 0.36 | 0.36 |
| $\sum EO/\sum A_2O$ | 0.17 | 0.46 | 1.08 | 1.05 | 1.05 |

From above, it was confirmed that the optical glasses in Examples were highly dispersive and had a high partial dispersion ratio. Further, it was confirmed that the optical glasses in Examples were excellent in transparency with suppressed coloration.

Reference Signs List

1 Imaging device
101 Camera body
102 Lens barrel
103 Lens
104 Sensor chip
105 Glass substrate
106 Multi-chip module
CAM Imaging device (fixed lens camera)
WL Photographing lens
M Liquid crystal monitor
EF Auxiliary light emitting unit
B1 Release button
B2 Function button
2 Multi-photon microscope
201 Pulse laser device
202 Pulse division device
203 Beam adjustment unit
204, 205, 212 Dichroic mirror
206 Objective lens
207, 211, 213 Fluorescence detection unit
208 Condensing lens
209 Pinhole
210 Image forming lens
S Sample
3 Cemented lens
301 First lens element
302 Second lens element
303 Joining member

**Claims**

1. An optical glass comprising:

   by mass,
   20% to 50% of a content rate of $P_2O_5$;
   10% to 35% of a content rate of $TiO_2$;
   0% to 20% of a content rate of $Nb_2O_5$; and
   5° to 30% of a content rate of $Bi_2O_3$, wherein
   a ratio of a content rate of $TiO_2$ to a content rate of $P_2O_5$ ($TiO_2/P_2O_5$) is from 0.30 to 0.75.

2. The optical glass according to claim 1, further comprising:

   by mass,
   0% to 10% of a content rate of $Al_2O_3$; and
   0% to 20% of a content rate of $Ta_2O_5$.

3. The optical glass according to claim 1 or 2, further comprising:

   by mass,

0% to 5% of a content rate of $Li_2O$;
0% to 25% of a content rate of $Na_2O$; and
0% to 25% of a content rate of $K_2O$.

4. The optical glass according to any one of claims 1 to 3, further comprising:

by mass,
0% to 15% of a content rate of ZnO;
0% to 10% of a content rate of MgO;
0% to 8% of a content rate of CaO;
0% to 10% of a content rate of SrO; and
0% to 15% of a content rate of BaO.

5. The optical glass according to any one of claims 1 to 4, further comprising:

by mass,
0% to 5% of a content rate of $SiO_2$; and
0% to 10% of a content rate of $B_2O_3$.

6. The optical glass according to any one of claims 1 to 5, further comprising:

by mass,
0% to 25% of a content rate of $WO_3$; and
0% to 5% of a content rate of $ZrO_2$.

7. The optical glass according to any one of claims 1 to 6, further comprising:

0% to 10% of a content rate of $Y_2O_3$;
0% to 8% of a content rate of $La_2O_3$; and
0% to 10% of a content rate of $Gd_2O_3$.

8. The optical glass according to any one of claims 1 to 7, further comprising:
0% to 1% of a content rate of $Sb_2O_3$.

9. The optical glass according to any one of claims 1 to 8, wherein,
by mass, a total content rate of $Li_2O$, $Na_2O$, and $K_2O$ ($\Sigma A_2O$; where, A = Li, Na, K) is 5% to 35%.

10. The optical glass according to any one of claims 1 to 9, wherein,
by mass, a total content rate of MgO, CaO, SrO, BaO, and ZnO ($\Sigma EO$; where, E = Mg, Ca, Sr, Ba, Zn) is 0% to 18%.

11. The optical glass according to any one of claims 1 to 10, wherein
a ratio of a content rate of $Al_2O_5$ to a content rate of $TiO_2$ ($Al_2O_3/TiO_2$) is from 0 to 0.60.

12. The optical glass according to any one of claims 1 to 11, wherein
a ratio of a content rate of $B_2O_3$ to a content rate of $P_2O_5$ ($B_2O_3/P_2O_5$) is from 0 to 0.15.

13. The optical glass according to any one of claims 1 to 12, wherein
a ratio of a content rate of $TiO_2$ to a total content rate of $P_2O_5$, $B_2O_3$, and $Al_2O_3$ ($TiO_2/(P_2O_5 + B_2O_3 + Al_2O_3)$) is from 0.25 to 0.75 or less.

14. The optical glass according to any one of claims 1 to 13, wherein

a ratio of a content rate of $TiO_2$ to a total content rate of $TiO_2$, $Nb_2O_5$, $WO_3$, $Bi_2O_3$, and $Ta_2O_5$ ($TiO_2/(TiO_2 + Nb_2O_5 + WO_3 + Bi_2O_3 + Ta_2O_5)$) is from 0.20 to 0.90.

15. The optical glass according to any one of claims 1 to 14, wherein
a ratio of a total content rate of BaO and $TiO_2$ to a content rate of $P_2O_5$ ($(BaO + TiO_2)/P_2O_5$) is from 0.30 to 1.00.

**16.** The optical glass according to any one of claims 1 to 15, wherein
a ratio of a total content rate of $BaO$, $TiO_2$, $Nb_2O_5$, $WO_3$, $Bi_2O_3$, and $Ta_2O_5$ to a total content rate of $P_2O_5$, $B_2O_3$, $SiO_2$, and $Al_2O_3$ (($BaO + TiO_2 + Nb_2O_5 + WO_3 + Bi_2O_3 + Ta_2O_5$)/($P_2O_5 + B_2O_3 + SiO_2 + Al_2O_3$)) is from 0.50 to 2.50.

**17.** The optical glass according to any one of claims 1 to 16, wherein
a ratio of a total content rate of $Li_2O$, $Na_2O$, and $K_2O$ ($\Sigma A_2O$; where, A = Li, Na, K) to a content rate of $TiO_2$ ($\Sigma A_2O/TiO_2$) is from 0.30 to 2.00.

**18.** The optical glass according to any one of claims 1 to 17, wherein
a ratio of a total content rate of $MgO$, $CaO$, $SrO$, $BaO$, and $ZnO$ ($\Sigma EO$; where, E = Mg, Ca, Sr, Ba, Zn) to a total content rate of $Li_2O$, $Na_2O$, and $K_2O$ ($\Sigma A_2O$; where, A = Li, Na, K) ($\Sigma EO/\Sigma A_2O$) is from 0 to 1.50.

**19.** The optical glass according to any one of claims 1 to 18, wherein
a refractive index ($n_d$) with respect to a d-line falls within a range from 1.61 to 1.90.

**20.** The optical glass according to any one of claims 1 to 19, wherein
an abbe number ($\nu_d$) falls within a range from 20 to 32.

**21.** The optical glass according to any one of claims 1 to 20, wherein
a partial dispersion ratio ($P_{g,F}$) is from 0.60 to 0.66.

**22.** The optical glass according to any one of claims 1 to 21, wherein
abnormal dispersibility ($\Delta P_{g,F}$) is from 0.015 to 0.042.

**23.** An optical element using the optical glass according to any one of claims 1 to 22.

**24.** An optical system comprising the optical element according to claim 23.

**25.** An interchangeable camera lens comprising the optical system according to claim 24.

**26.** An objective lens for a microscope comprising the optical system according to claim 24.

**27.** An optical device comprising the optical system according to claim 24.

**28.** A cemented lens comprising:

a first lens element; and
a second lens element, wherein
at least one of the first lens element and the second lens element comprises the optical glass according to any one of claims 1 to 22.

**29.** An optical system comprising the cemented lens according to claim 28.

**30.** An objective lens for a microscope comprising the optical system according to claim 29.

**31.** An interchangeable camera lens comprising the optical system according to claim 29.

**32.** An optical device comprising the optical system according to claim 29.

Fig. 1

Fig. 2

*Fig. 3*

CAM

B1

B2

M

Fig. 4

Fig. 5

*Fig.6*

## INTERNATIONAL SEARCH REPORT

| International application No. |
| --- |
| PCT/JP2020/042233 |

### A. CLASSIFICATION OF SUBJECT MATTER
C03C 3/21(2006.01)i; C03C 3/068(2006.01)i; C03C 3/17(2006.01)i; C03C 3/19(2006.01)i
FI: C03C3/21; C03C3/19; C03C3/17; C03C3/068

According to International Patent Classification (IPC) or to both national classification and IPC

### B. FIELDS SEARCHED

Minimum documentation searched (classification system followed by classification symbols)
C03C3/21; C03C3/068; C03C3/17; C03C3/19

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
INTERGLAD

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2014-185075 A (HOYA CORP.) 02 October 2014 (2014-10-02) paragraphs [0007], [0042]-[0046], [0059]-[0062], table 1 | 1-13, 15-24<br>25-32<br>14 |
| Y<br>A | JP 2019-001675 A (HIKARI GLASS CO., LTD.) 10 January 2019 (2019-01-10) paragraphs [0001]-[0002], [0054]-[0069], claims 14-19 | 25-32<br>1-24 |
| A | JP 2003-300751 A (OHARA, INC.) 21 October 2003 (2003-10-21) entire text | 1-32 |
| A | JP 2010-006675 A (OHARA, INC.) 14 January 2010 (2010-01-14) entire text | 1-32 |
| A | JP 2010-222236 A (OHARA, INC.) 07 October 2010 (2010-10-07) entire text | 1-32 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 January 2021 (07.01.2021) | 19 January 2021 (19.01.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2020/042233

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-001948 A (OHARA, INC.) 05 January 2017 (2017-01-05) entire text | 1-32 |

Form PCT/ISA/210 (continuation of second sheet) (January 2015)

| INTERNATIONAL SEARCH REPORT | International application No. |
|---|---|
| Information on patent family members | PCT/JP2020/042233 |

| Patent Documents referred in the Report | Publication Date | Patent Family | Publication Date |
|---|---|---|---|
| JP 2014-185075 A | 02 Oct. 2014 | US 2015/0368151 A1 paragraphs [0002], [0194]-[0213], table 3, examples 2-6 WO 2014/129510 A1 TW 201500318 A CN 104981439 A KR 10-2015-0120346 A | |
| JP 2019-001675 A | 10 Jan. 2019 | US 2020/0115271 A1 paragraphs [0001]- [0002], [0063]- [0083], claims 14-19 WO 2018/230220 A1 CN 110650927 A | |
| JP 2003-300751 A | 21 Oct. 2003 | (Family: none) | |
| JP 2010-006675 A | 14 Jan. 2010 | (Family: none) | |
| JP 2010-222236 A | 07 Oct. 2010 | CN 101817638 A whole document HK 1199239 A | |
| JP 2017-001948 A | 05 Jan. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006219365 A